# EUROPEAN PATENT APPLICATION

(11) **EP 3 439 153 A1**
(43) Date of publication of application: **06.02.2019**
(21) Application number: 17773964.6
(22) Date of filing: 27.02.2017
(51) Int. Cl.: H02K 7/116, B25J 9/08, F16H 1/32

(54) **ROTARY ACTUATOR AND ROBOT**

(30) Priority: 30.03.2016 JP 2016067467; 29.09.2016 JP 2016190548
(71) Applicant: Nidec Corporation, Kyoto-shi, Kyoto 601-8205 (JP); Nidec Shimpo Corporation, Nagaokakyo-city, Kyoto 617-0833 (JP)
(72) Inventor: AYUZAWA, Yuu, Suwa-gun Nagano 393-8511 (JP); WAKABAYASHI, Toshiharu, Nagaokakyo-city Kyoto 617-0833 (JP); YONEMURA, Takurou, Nagaokakyo-city Kyoto 617-0833 (JP)
(74) Representative: 2K Patentanwälte Blasberg Kewitz & Reichel
(86) International application number: PCT/JP2017/007355
(87) International publication number: WO 2017/169419

(57) **Abstract**

Provided is a hollow-type rotary actuator. For example, a rotary actuator 2 used in a joint part of an industrial robot is provided with: a hollow motor 7 having a hollow rotary shaft 13; a hollow reduction gear 8 having a hollow input shaft 20 that is arranged coaxially with the rotary shaft 13 and is coupled to the rotary shaft 13; a tubular member 26 disposed on the inner peripheral side of the rotary shaft 13 and the input shaft 20; and a holding member 32 that holds one end side of the tubular member 26. The holding member 32 is provided with a holding portion 32a, in which a through-hole 32b communicating with the inner peripheral side of the tubular member 26 is formed. In the rotary actuator 2, one end side of the tubular member 26 is held by the holding portion 32a, and the other end side of the tubular member 26 is loosely fitted to the output side portion of the hollow reduction gear 8.

## Description

### [Technical Field]

The present invention relates to a hollow-type rotary actuator including a hollow motor and a hollow reduction gear which are disposed coaxially with each other. The present invention also relates to a robot having such a rotary actuator.

### [Background Art]

Conventionally, a hollow-type rotary actuator including a hollow motor and a hollow reduction gear is known (for example, refer to Patent Document 1). In the hollow-type rotary actuator described in Patent Document 1, the hollow reduction gear is a hollow wave gear device and includes an annular device housing, a rigid internal gear fixed to an inner circumferential portion of the device housing, a cup-shaped flexible external gear disposed inside the rigid internal gear, and a wave generator disposed inside the flexible external gear. The flexible external gear is rotatably supported by the device housing via a cross roller bearing. A part of the wave generator is fixed to an outer circumferential surface of a hollow motor shaft of the hollow motor.

Further, in the hollow-type rotary actuator described in Patent Document 1, the hollow motor and the hollow reduction gear are disposed coaxially with each other. A sleeve formed in a cylindrical shape is disposed on the inner circumferential side of the hollow motor and hollow reduction gear. The sleeve is fixed by laser welding to a boss forming a part of the flexible external gear. Therefore, the sleeve rotates with the flexible external gear when the flexible external rotates.

### [Citation List]

### [Patent Literature ]

[Patent Literature 1]
Japanese Unexamined Patent Application Publication No. 2014-206265

### [Summary of Invention]

### [Technical Problem]

The hollow-type rotary actuator described in Patent Document 1 is used, for example, in a joint part of an industrial robot. When the hollow-type rotary actuator described in Patent Document 1 is used in the joint part of an industrial robot, in general, various types of wiring or piping are arranged to pass through the inner circumferential side of the sleeve. In the hollow-type rotary actuator described in Patent Document 1, since the sleeve is fixed to the flexible external gear and the sleeve rotates as the flexible external gear rotates, when this hollow-type rotary actuator is used in the joint part of the industrial robot, an inner circumferential surface of the rotating sleeve may be brought into contact with the wiring or the piping, and the wiring or the piping may be damaged.

Therefore, an objective of the present invention is to provide a hollow-type rotary actuator capable of minimizing damage to wiring or piping passing through an inner circumferential side of the rotary actuator more than before when used in a joint part of a robot. Further, another objective of the present invention is to provide a robot having such a rotary actuator.

### [Solution to Problem]

To solve the above-described problems, a rotary actuator of the present invention includes a hollow motor having a hollow rotary shaft, a hollow reduction gear having a hollow input shaft disposed coaxially with the rotary shaft and connected to the rotary shaft, a cylindrical tubular member disposed on an inner circumferential side of the rotary shaft and the input shaft, and a holding member which holds one end side of the tubular member, wherein the holding member includes a holding portion in which a through-hole communicating with an inner circumferential side of the tubular member is formed, one end side of the tubular member is held by the holding portion, and the other end side of the tubular member is loosely fitted to an output side portion of the hollow reduction gear.

In the rotary actuator of the present invention, one end side of the cylindrical tubular member disposed on the inner circumferential side of the rotary shaft of the hollow motor and the input shaft of the hollow reduction gear is rotatably held by the holding portion of the holding member, and the other end side of the tubular member is loosely fitted to the output side portion of the hollow reduction gear. That is, the other end side of the tubular member is held in a state in which it is not fixed to the output side portion of the hollow reduction gear. Thus, in the present invention, even when the output shaft of the hollow reduction gear rotates, the tubular member does not necessarily rotate. Therefore, in the present invention, for example, when the rotary actuator is used in a joint part of a robot, even when wiring or piping is disposed to pass through the inner circumferential side of the tubular member, it is possible to minimize damage to the wiring or the piping passing through the inner circumferential side of the rotary actuator more than before. Further, in the present invention, since the other end side of the tubular member is not fixed to the output side portion of the hollow reduction gear, assembling work of the rotary actuator becomes easier than, for example, a case in which the other end side of the tubular member is fixed to the output side portion of the hollow reduction gear by welding, adhering or the like.

In the present invention, the rotary actuator may further include a fixed member fixed to an output shaft of the hollow reduction gear, the fixed member may have an inserted portion which is inserted into an inner circumferential side of the other end side portion of the tubular member, and an inner circumferential surface of the tubular member and an outer circumferential surface of the inserted portion may be in contact with each other. That is, the other end side of the tubular member is held on the output side portion of the hollow reduction gear by the inner circumferential surface of the tubular member and the outer circumferential surface of the inserted portion coming into contact with each other. In this case, it is possible to hold the other end side of the tubular member to the output side portion of the hollow reduction gear with a relatively simple configuration.

In the present invention, preferably, the inserted portion may be disposed on an inner circumferential side of the input shaft. With such a configuration, it is possible to reduce a size of the rotary actuator in the axial direction of the input shaft, as compared with a case in which the input shaft and the inserted portion are disposed in a state in which they are displaced from each other in the axial direction of the input shaft.

In the present invention, the rotary actuator may further include a fixed member fixed to an output shaft of the hollow reduction gear, the fixed member may include an insertion portion into which the other end side portion of the tubular member is inserted, and an outer circumferential surface of the tubular member and an inner circumferential surface of the insertion portion may be in contact with each other. That is, the other end side of the tubular member may be held on the output side portion of the hollow reduction gear by the outer circumferential surface of the tubular member and the inner circumferential surface of the insertion portion coming into contact with each other. In this case as well, it is possible to hold the other end side of the tubular member to the output side portion of the hollow reduction gear with a relatively simple configuration.

In the present invention, the tubular member may be formed of a resin, or the inner circumferential surface of the tubular member may be coated with a resin. With such a configuration, for example, when the rotary actuator is used in the joint part of the robot and the wiring is disposed to pass through the inner circumferential side of the tubular member, it is possible to prevent a short circuit between the tubular member and the wiring even if the wiring slides on the inner circumferential surface of the tubular member and the coating of the wiring disposed on the inner circumferential side of the tubular member is broken.

The rotary actuator of the present invention can be used in a robot including a joint part configured by a rotary actuator, and wiring disposed to pass through the inner circumferential side of the tubular member. In this robot, it is possible to minimize the damage to the wiring passing through the inner circumferential side of the rotary actuator more than before.

### [Advantageous Effects of Invention]

As described above, in the present invention, in the hollow-type rotary actuator, for example, when the rotary actuator is used in the joint part of the robot, damage to the wiring or piping passing through the inner circumferential side of the rotary actuator can be minimized more than before. Further, in the robot of the present invention, it is possible to minimize damage to the wiring passing through the inner circumferential side of the rotary actuator more than before.

### [Brief Description of Drawings]

FIG. 1 is a front view of an industrial robot according to an embodiment of the present invention.
FIG. 2(A) is a perspective view of the industrial robot shown in FIG. 1, and FIG. 2(B) is a perspective view showing a state in which the industrial robot shown in FIG. 2(A) is operating.
FIG. 3 is a longitudinal cross-sectional view of a joint part shown in FIG. 1.

### [Description of Embodiments]

Hereinafter, an embodiment of the present invention will be described with reference to the drawings.

### (Schematic configuration of industrial robot)

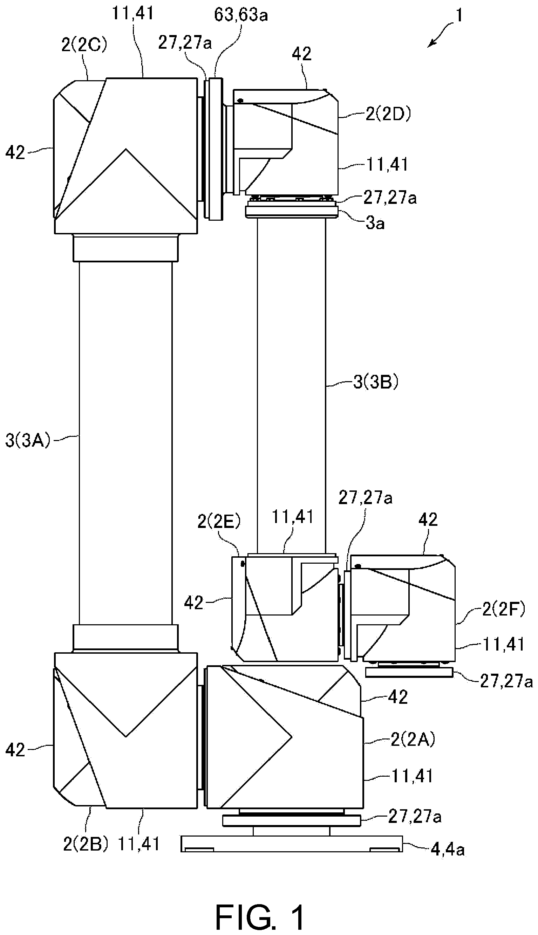

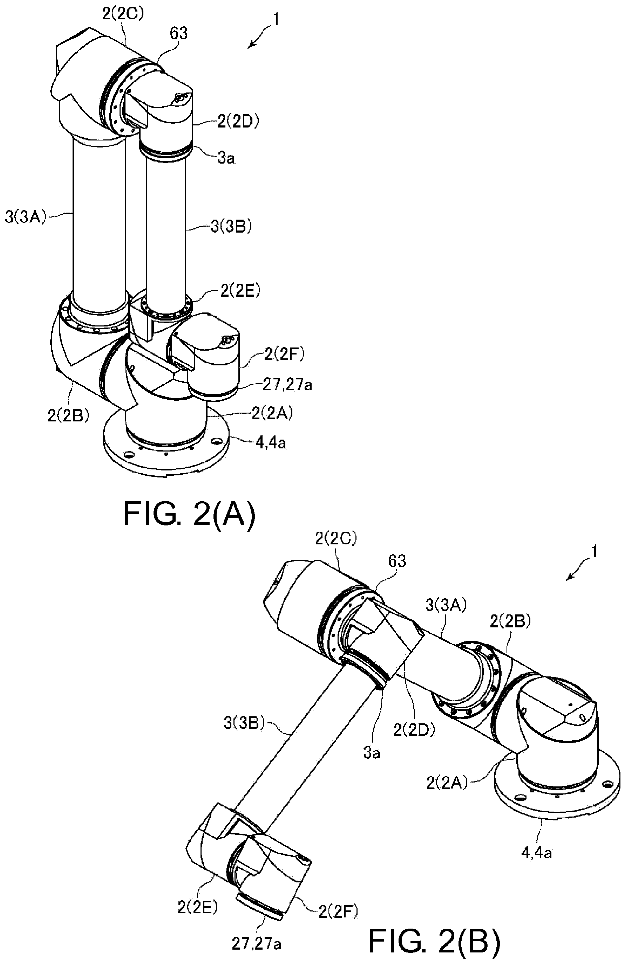

FIG. 1 is a front view of an industrial robot 1 according to an embodiment of the present invention. FIG. 2(A) is a perspective view of the industrial robot 1 shown in FIG. 1, and FIG. 2(B) is a perspective view showing a state in which the industrial robot 1 shown in FIG. 2(A) is operating.

The industrial robot 1 (hereinafter referred to as "robot 1") of the embodiment is an articulated robot used for assembling or manufacturing predetermined products and is installed and used in an assembly line or a manufacturing line. The robot 1 includes a plurality of joint parts 2 and a plurality of arms 3. In this embodiment, the robot 1 includes six joint parts 2 and two arms 3. Hereinafter, when the six joint parts 2 are distinguished from each other, the six joint parts 2 are referred to as a "first joint part 2A," a "second joint part 2B," a "third joint part 2C," a "fourth joint part 2D," a "fifth joint part 2E," and a "sixth joint part 2F." Further, in the following description, when the two arms 3 are distinguished from each other, the two arms 3 are referred to as a "first arm 3A" and a "second arm 3B."

Further, the robot 1 includes a support member 4 which is connected to the first joint part 2A to be relatively rotatable. The support member 4 is formed in a flanged cylindrical shape having a flange portion 4a, and a through-hole (not shown) penetrating in the axial direction of the support member 4 is formed on the inner circumferential side of the support member 4. The flange portion 4a is formed in an annular shape and forms a bottom surface portion of the robot 1. The arm 3 is formed in an elongated cylindrical shape.

The first joint part 2A and the second joint part 2B are connected to be relatively rotatable in the robot 1, and the second joint part 2B and a base end of the first arm 3A are fixed. Further, a tip end of the first arm 3A and the third joint part 2C are fixed, the third joint part 2C and the fourth joint part 2D are connected to be relatively rotatable, the fourth joint part 2D and a base end of the second arm 3B are connected to be relatively rotatable, a tip end of the second arm 3B and the fifth joint part 2E are fixed, and the fifth joint part 2E and the sixth joint part 2F are connected to be relatively rotatable. A hand, a tool, or the like can be installed on the sixth joint part 2F to be relatively rotatable.

Hereinafter, a specific configuration of the joint part 2 will be described. As shown in FIG. 1, in the embodiment, the first joint part 2A, the second joint part 2B, and the third joint part 2C are formed to have the same size, and the fourth joint part 2D, the fifth joint part 2E, and the sixth joint part 2F are formed to have the same size. In addition, the sizes of the first joint part 2A, the second joint part 2B, and the third joint part 2C are larger than the sizes of the fourth joint part 2D, the fifth joint part 2E, and the sixth joint part 2F. However, the first joint part 2A, the second joint part 2B, the third joint part 2C, the fourth joint part 2D, the fifth joint part 2E, and the sixth joint part 2F are formed to have the same configuration, except for the difference in size.

### (Configuration of joint part)

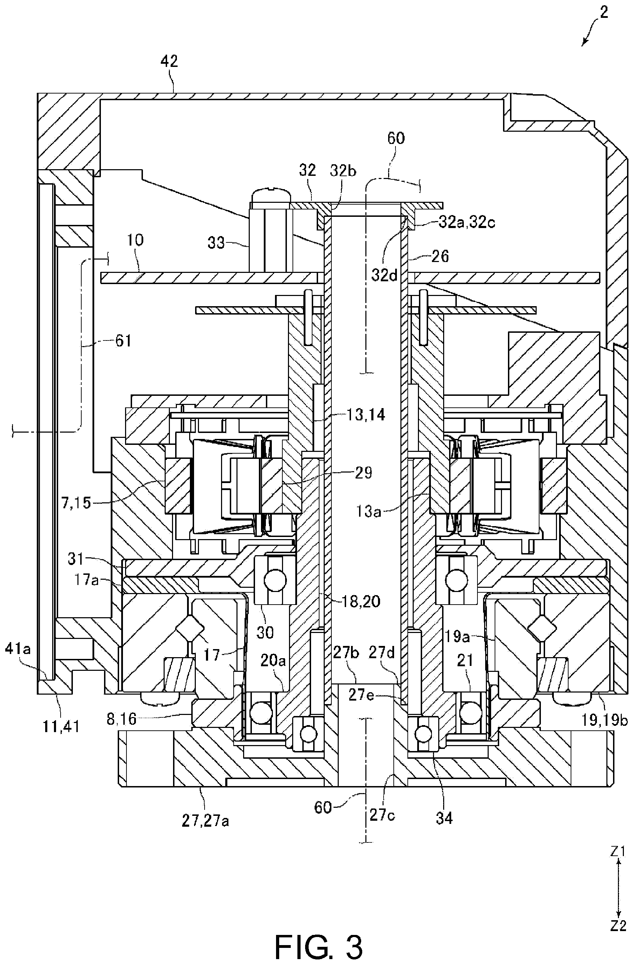

FIG. 3 is a longitudinal cross-sectional view of the joint part 2 shown in FIG. 1. Hereinafter, for the sake of convenience of explanation, a Z1 direction side in FIG. 3 will be referred to as the "upper" side, and a Z2 direction side opposite thereto will be referred to as the "lower" side.

The joint part 2 includes a motor 7, a reduction gear 8 connected to the motor 7, a circuit board 10 to which the motor 7 is electrically connected, and a case body 11 in which the motor 7, the reduction gear 8, and the circuit board 10 are accommodated, and the joint part 2 itself is a rotary actuator. That is, the joint part 2 is configured by a rotary actuator.

The motor 7 is a hollow motor in which a through-hole is formed in a center in the radial direction and has a hollow rotary shaft 13. Further, the motor 7 includes a rotor 14 and a stator 15. The reduction gear 8 is a hollow reduction gear in which a through-hole is formed in a center in the radial direction. The motor 7 and the reduction gear 8 are disposed to overlap in the vertical direction. Specifically, the motor 7 is disposed on the upper side, and the reduction gear 8 is disposed on the lower side. Further, the motor 7 and the reduction gear 8 are disposed coaxially.

The reduction gear 8 of the embodiment is a hollow wave gear device and includes a rigid internal gear 16, a flexible external gear 17, a wave generating portion 18, and a cross roller bearing 19. The wave generating portion 18 includes a hollow input shaft 20 connected to the rotary shaft 13, and a wave bearing 21 installed on the outer circumference side of the input shaft 20. In the embodiment, the rigid internal gear 16 serves as an output shaft of the reduction gear 8. Further, the joint part 2 includes a tubular (more specifically, cylindrical) member 26 disposed on the inner circumferential side of the rotary shaft 13 and the input shaft 20, and an output side member 27 fixed to the rigid internal gear 16.

As described above, the motor 7 includes the rotor 14 and the stator 15. The rotor 14 includes the rotary shaft 13, and a driving magnet 29 fixed to the rotary shaft 13. The rotary shaft 13 is formed in a substantially cylindrical shape elongated in the vertical direction and disposed so that the axial direction of the rotary shaft 13 and the vertical direction coincide with each other. That is, the vertical direction is the axial direction of the rotary shaft 13 and the axial direction of the rotor 14. The rotary shaft 13 serves as a back yoke and is formed of a soft magnetic material. The rotary shaft 13 of the embodiment is formed of an iron-based metal such as a steel material.

The driving magnet 29 is formed in a cylindrical shape. A length of the driving magnet 29 (a length in the vertical direction) is shorter than that of the rotary shaft 13, and the driving magnet 29 is fixed to an outer circumferential surface of a lower end side portion of the rotary shaft 13. In the embodiment, the driving magnet 29 is fixed to the outer circumferential surface of the rotary shaft 13 so that a lower end surface of the rotary shaft 13 and a lower end surface of the driving magnet 29 coincide with each other.

The stator 15 is formed in a substantially cylindrical shape as a whole and is disposed on the outer circumferential side of the driving magnet 29 to cover an outer circumferential surface of the driving magnet 29. An upper end side portion of the rotary shaft 13 protrudes upward from an upper end surface of the stator 15. The stator 15 includes a driving coil, and a stator core having a plurality of salient poles around which a driving coil is wound via an insulator. The salient poles of the stator core are formed to protrude toward the inner circumferential side, and tip end surfaces of the salient poles face the outer circumferential surface of the driving magnet 29. The stator 15 is fixed to the case body 11.

As described above, the reduction gear 8 includes the rigid internal gear 16, the flexible external gear 17, the wave generating portion 18, and the cross roller bearing 19. The rigid internal gear 16 is formed in a substantially flat cylindrical shape and disposed so that the axial direction of the rigid internal gear 16 and the vertical direction coincide with each other. That is, the vertical direction is the axial direction of the rigid internal gear 16 which is the output shaft of the reduction gear 8. The rigid internal gear 16 is fixed to an inner ring 19a of the cross roller bearing 19. An outer ring 19b of the cross roller bearing 19 is fixed to a lower end side portion of the case body 11, and the rigid internal gear 16 is rotatably held by the lower end side portion of the case body 11 via the cross roller bearing 19.

The flexible external gear 17 is formed in a flanged substantially cylindrical shape having a flange portion 17a at an upper end thereof. The flange portion 17a is formed in a substantially annular shape, and an outer circumferential side portion of the flange portion 17a is fixed to the case body 11. The rigid internal gear 16 forms a lower end side portion of the reduction gear 8. The flange portion 17a forms an upper end side portion of the reduction gear 8. Internal teeth are formed on an inner circumferential surface of the rigid internal gear 16. External teeth meshing with the internal teeth of the rigid internal gear 16 are formed on an outer circumferential surface of the flexible external gear 17 on the lower end side.

As described above, the wave generating portion 18 includes the input shaft 20 and the wave bearing 21. The input shaft 20 is formed in a tubular shape which is elongated as a whole in the vertical direction and is disposed so that the axial direction of the input shaft 20 and the vertical direction coincide with each other. The input shaft 20 is formed of a material having a specific gravity smaller than that of the soft magnetic material forming the rotary shaft 13. Further, the input shaft 20 is formed of a non-magnetic material. Specifically, the input shaft 20 is formed of an aluminum alloy. A portion of the input shaft 20 other than the lower end side portion is formed in a substantially elongated cylindrical shape. A lower end side portion of the input shaft 20 is an elliptical portion 20a in which a shape of an inner circumferential surface thereof when seen in the axial direction of the input shaft 20 is circular and a shape of an outer circumferential surface thereof when seen in the axial direction of the input shaft 20 is elliptical. The input shaft 20 may be formed of a material other than an aluminum alloy as long as it is formed of a material having a specific gravity smaller than that of the soft magnetic material forming the rotary shaft 13.

The rotary shaft 13 and the input shaft 20 are disposed coaxially, and the inner circumferential side of the input shaft 20 communicates with the inner circumferential side of the rotary shaft 13. An upper end side portion of the input shaft 20 is inserted and fixed into the inner circumferential side of the lower end side portion of the rotary shaft 13. Specifically, the upper end side portion of the input shaft 20 is inserted and fixed into the inner circumferential side of a portion of the rotary shaft 13 to which the driving magnet 29 is fixed. That is, the rotary shaft 13 has a tubular (more specifically, cylindrical) magnet fixing portion 13a, to which the driving magnet 29 is fixed on the outer circumferential side, at the lower end side of the rotary shaft 13, and the upper end side of the input shaft 20 is inserted and fixed into the inner circumferential side of the magnet fixing portion 13a. In addition, the upper end side portion of the input shaft 20 is fixed to the rotary shaft 13 by bonding. In the embodiment, an upper end surface of the driving magnet 29 and an upper end surface of the input shaft 20 are disposed at the same position in the vertical direction.

A center portion of the input shaft 20 in the vertical direction is rotatably supported by a bearing 30. The bearing 30 is a ball bearing. The bearing 30 is installed at a bearing holding member 31, and the bearing holding member 31 is fixed to the case body 11. That is, the input shaft 20 is rotatably supported by the bearing 30 installed at the case body 11 via the bearing holding member 31. The bearing holding member 31 is formed in an annular and flat plate shape and is fixed to the case body 11 to overlap the flange portion 17a of the flexible external gear 17 in the vertical direction.

The wave bearing 21 is a ball bearing having a flexible inner ring and an outer ring. The wave bearing 21 is disposed along an outer circumferential surface of the elliptical portion 20a and is flexed in an elliptical shape. The lower end side portion of the flexible external gear 17 on which the external teeth are formed is disposed on the outer circumferential side of the wave bearing 21 to surround the wave bearing 21, and this portion is flexed in an elliptical shape. The external teeth of the flexible external gear 17 mesh with the internal teeth of the rigid internal gear 16 at two places of the lower end side portion of the flexible external gear 17, which is flexed in the elliptical shape, in the long axis direction.

The output side member 27 is formed in a flanged substantially cylindrical shape having a flange portion 27a and a cylindrical portion 27b. The output side member 27 is disposed so that the axial direction of the output side member 27 and the vertical direction coincide with each other, and a through-hole 27c penetrating in the vertical direction is formed on the inner circumferential side of the output side member 27. The flange portion 27a is formed in a flat plate shape and an annular shape and is connected to a lower end of the cylindrical portion 27b. The flange portion 27a is fixed to the rigid internal gear 16 so that an upper surface of the flange portion 27a is in contact with a lower surface of the rigid internal gear 16. Further, the flange portion 27a is disposed below a lower end of the case body 11 and disposed outside the case body 11.

A small diameter portion 27d having an outer diameter smaller than that of the lower end side portion of the cylindrical portion 27b is formed on the upper end side of the cylindrical portion 27b, and an annular stepped surface 27e orthogonal in the vertical direction is formed on the outer circumferential side of an upper end side portion of the cylindrical portion 27b. The small diameter portion 27d is inserted into the inner circumferential side of a lower end side portion of the tubular member 26, and a lower end surface of the tubular member 26 faces the stepped surface 27e. Further, the through-hole 27c communicates with the inner circumferential side of the tubular member 26.

In the embodiment, an inner circumferential surface of the tubular member 26 and an outer circumferential surface of the small diameter portion 27d are in contact with each other. Further, as the inner circumferential surface of the tubular member 26 and the outer circumferential surface of the small diameter portion 27d come into contact with each other, the lower end side of the tubular member 26 is held by the output side member 27. That is, as the inner circumferential surface of the tubular member 26 and the outer circumferential surface of the small diameter portion 27d come into contact with each other, the lower end side of the tubular member 26 is held by an output side portion of the reduction gear 8 which is configured with the rigid internal gear 16 as the output shaft of the reduction gear 8 and the output side member 27, and the lower end side of the tubular member 26 is loosely fitted to the output side portion of the reduction gear 8. The output side member 27 of the embodiment is a fixed member fixed to the rigid internal gear 16 which is the output shaft of the reduction gear 8, and the small diameter portion 27d is an inserted portion which is inserted into the inner circumferential side of the other end side portion of the tubular member 26. The loosely fitted state is that the lower end side of the tubular member 26 is held in a state in which it is not fixed to the output side portion of the reduction gear 8.

The upper end side portion of the cylindrical portion 27b is disposed on the inner circumferential side of the lower end side portion of the input shaft 20. That is, the small diameter portion 27d is disposed on the inner circumferential side of the lower end side portion of the input shaft 20. The bearing 34 is disposed between an outer circumferential surface of the cylindrical portion 27b and an inner circumferential surface of the lower end side portion of the input shaft 20. The bearing 34 is a ball bearing.

The tubular member 26 is formed of an aluminum alloy. Further, the tubular member 26 is formed in a cylindrical shape elongated in the vertical direction and disposed so that the axial direction of the tubular member 26 and the vertical direction coincide with each other. That is, the vertical direction is the axial direction of the tubular member 26. The tubular member 26 may be formed of a metal other than an aluminum alloy.

As described above, the tubular member 26 is inserted into the inner circumferential side of the rotary shaft 13 and the input shaft 20. An upper end surface of the tubular member 26 is disposed above an upper end surface of the rotary shaft 13, and the lower end surface of the tubular member 26 is disposed above a lower end surface of the input shaft 20. Also, as described above, the small diameter portion 27d of the output side member 27 is inserted into the inner circumferential side of the lower end side portion of the tubular member 26, the lower end surface of the tubular member 26 faces the stepped surface 27e, and the lower end side of the tubular member 26 is held by the output side member 27. Specifically, the lower end side of the tubular member 26 is held by the output side member 27 to enable relative rotation of the tubular member 26 with respect to the output side member 27 with the vertical direction as the axial direction of the rotation.

The upper end side of the tubular member 26 is held by the holding member 32. The holding member 32 is fixed to a support column 33, and the support column 33 is fixed to the case body 11. That is, the holding member 32 is fixed to the case body 11 via the support column 33. The holding member 32 has a cylindrical holding portion 32a which holds the upper end side of the tubular member 26. The holding portion 32a is disposed so that the axial direction of the holding portion 32a and the vertical direction coincide with each other, and a through-hole 32b penetrating in the vertical direction is formed on the inner circumferential side of the holding portion 32a. The support column 33 may be fixed to the circuit board 10.

A large diameter portion 32c having an inner diameter larger than that of the upper end side of the holding portion 32a is formed on the lower end side of the holding portion 32a, and an annular stepped surface 32d orthogonal in the vertical direction is formed on the inner circumferential side of a lower end side portion of the holding portion 32a. The upper end side of the tubular member 26 is inserted into the inner circumferential side of the large diameter portion 32c, and the upper end surface of the tubular member 26 faces the stepped surface 32d. In addition, the upper end side of the tubular member 26 is held by the holding portion 32a to enable rotation of the tubular member 26 with the vertical direction as the axial direction of the rotation. The through-hole 32b of the holding portion 32a communicates with the inner circumferential side of the tubular member 26. That is, the through-hole 32b communicating with the inner circumferential side of the tubular member 26 is formed in the holding member 32.

The case body 11 includes a case main body 41 in which upper and lower ends thereof open, and a cover 42 which closes an opening on the upper end side of the case main body 41. The opening on the lower end side of the case main body 41 is closed by the reduction gear 8. An opening portion 41a opening in a direction orthogonal to the vertical direction is formed in a side surface of the case main body 41. That is, the opening portion 41a opening in the direction orthogonal to the vertical direction is formed in the case body 11. The opening portion 41a is formed to pass through the side surface portion of the case main body 41.

The circuit board 10 is a rigid board such as a glass epoxy board and is formed in a flat plate shape. This circuit board 10 is fixed to the case body 11 so that the thickness direction of the circuit board 10 and the vertical direction coincide with each other. Further, the circuit board 10 is fixed to the upper end side of the case body 11. An upper end of the tubular member 26 is disposed above an upper surface of the circuit board 10. A motor driving circuit for driving the motor 7, and so on is mounted on the circuit board 10.

In addition, at least two connectors (not shown) are mounted on the circuit board 10. Wiring 60 connected to one of the two connectors is disposed to pass through the inner circumferential side of the tubular member 26 and then is drawn out from the through-hole 27c of the output side member 27. That is, the wiring 60 is disposed to pass through the inner circumferential side of the rotary shaft 13 and the input shaft 20 and then drawn out from the through-hole 27c of the output side member 27. Further, the wiring 61 connected to the other one of the two connectors is drawn out from the opening portion 41a of the case body 11.

### (Connecting structure of joint part 2 and arm 3 of robot 1)

As a connecting structure of the joint part 2 and the arm 3 of the robot 1, for example, each of the joint parts 2 and the arms 3 are connected as described below so that the robot 1 can perform an operation shown in FIG. 2(B).

In the following description, the axial direction of the rigid internal gear 16 of the first joint part 2A is referred to as "the axial direction of the first joint part 2A," the axial direction of the rigid internal gear 16 of the second joint part 2B is referred to as "the axial direction of the second joint part 2B," the axial direction of the rigid internal gear 16 of the third joint part 2C is referred to as "the axial direction of the third joint part 2C," the axial direction of the rigid internal gear 16 of the fourth joint part 2D is referred to as "the axial direction of the fourth joint part 2D," the axial direction of the rigid internal gear 16 of the fifth joint part 2E is referred to as "the axial direction of the fifth joint part 2E," and the axial direction of the rigid internal gear 16 of the sixth joint part 2F is referred to as "the axial direction of the sixth joint part 2F."

First, the support member 4 and the first joint part 2A are connected to each other by fixing an end surface of the support member 4 on the side, at which the flange portion 4a is not formed, to the flange portion 27a of the first joint part 2A. That is, the support member 4 and the first joint part 2A are connected so that the axial direction of the first joint part 2A and the axial direction of the support member 4 coincide with each other. The first joint part 2A and the second joint part 2B are connected so that the axial direction of the first joint part 2A and the axial direction of the second joint part 2B are orthogonal to each other. Also, the side surface of the case main body 41 of the first joint part 2A on which the opening portion 41a is formed is fixed to the flange portion 27a of the second joint part 2B.

The second joint part 2B and the first arm 3A are connected so that the axial direction of the second joint part 2B and the longitudinal direction (axial direction) of the first arm 3A are orthogonal to each other. Also, the base end of the first arm 3A is fixed to the side surface of the case main body 41 of the second joint part 2B in which the opening portion 41a is formed. The first arm 3A and the third joint part 2C are connected so that the longitudinal direction of the first arm 3A and the axial direction of the third joint part 2C are orthogonal to each other. Further, the tip end of the first arm 3A is fixed to the side surface of the case main body 41 of the third joint part 2C in which the opening portion 41a is formed.

The third joint part 2C and the fourth joint part 2D are connected so that the axial direction of the third joint part 2C and the axial direction of the fourth joint part 2D are orthogonal to each other. Also, the side surface of the case main body 41 of the fourth joint part 2D in which the opening portion 41a is formed is fixed to the flange portion 27a of the third joint part 2C. More specifically, the side surface of the case main body 41 of the fourth joint part 2D in which the opening portion 41a is formed is fixed to the flange portion 27a of the third joint part 2C via a connecting member 63 fixed to the side surface of the case main body 41 of the fourth joint part 2D in which the opening portion 41a is formed. The connecting member 63 is formed in a flanged cylindrical shape having a flange portion 63a fixed to the flange portion 27a of the third joint part 2C.

The fourth joint part 2D and the second arm 3B are connected so that the axial direction of the fourth joint part 2D and the longitudinal direction of the second arm 3B coincide with each other. Also, the base end of the second arm 3B is fixed to the flange portion 27a of the fourth joint part 2D. A flange portion 3a for fixing the base end of the second arm 3B to the flange portion 27a of the fourth joint part 2D is formed at the base end of the second arm 3B, and the flange portion 27a of the fourth joint part 2D and the flange portion 3a are fixed to each other.

The second arm 3B and the fifth joint part 2E are connected so that the longitudinal direction of the second arm 3B and the axial direction of the fifth joint part 2E are orthogonal to each other. Also, the tip end of the second arm 3B is fixed to the side surface of the case main body 41 of the fifth joint part 2E in which the opening portion 41a is formed. The fifth joint part 2E and the sixth joint part 2F are connected so that the axial direction of the fifth joint part 2E and the axial direction of the sixth joint part 2F are orthogonal to each other. Further, the side surface of the case main body 41 of the sixth joint part 2F in which the opening portion 41a is formed is fixed to the flange portion 27a of the fifth joint part 2E.

### (Main Effect of this Embodiment)

As described above, in the embodiment, the upper end side of the tubular member 26 is held by the holding portion 32a to enable the rotation of the tubular member 26 with the vertical direction as the axial direction of the rotation. Further, in the embodiment, the lower end side of the tubular member 26 is loosely fitted to the output side member 27. Thus, in the embodiment, even when the output side member 27 fixed to the rigid internal gear 16 rotates together with the rigid internal gear 16, the tubular member 26 does not necessarily rotate. Therefore, in the embodiment, damage to the wiring 60 passing through the inner circumferential side of the tubular member 26 can be minimized more than before. Further, in the embodiment, since the lower end side of the tubular member 26 is not fixed to the output side member 27, an assembling work of the joint part 2 becomes easier than a case in which the lower end side of the tubular member 26 is fixed to the output side member 27 by welding, adhering or the like.

In the embodiment, the lower end side of the tubular member 26 is held by the output side member 27 by the inner circumferential surface of the tubular member 26 and the outer circumferential surface of the small diameter portion 27d of the output side member 27 coming into contact with each other. Thus, in the embodiment, it is possible to hold the lower end side of the tubular member 26 to the output side member 27 with a relatively simple configuration. Further, in the embodiment, since the small diameter portion 27d is disposed on the inner circumferential side of the lower end side portion of the input shaft 20, the joint part 2 can be downsized in the vertical direction as compared with a case in which the small diameter portion 27d and the input shaft 20 are disposed in a state in which they are displaced from each other in the vertical direction.

### (Another embodiment)

The above-described embodiment is an example of a preferred embodiment of the present invention, but the present invention is not limited thereto, and various modifications can be made without changing the gist of the present invention.

In the above-described embodiment, the tubular member 26 is formed of a metal such as an aluminum alloy, but the tubular member 26 may be formed of a resin. Further, a resin may be coated on the inner circumferential surface of the metallic tubular member 26. In this case, even when the wiring 60 slides on the inner circumferential surface of the tubular member 26 and the coating of the wiring 60 disposed on the inner circumferential side of the tubular member 26 is broken, it is possible to prevent a short circuit between the tubular member 26 and the wiring 60.

Also, when the tubular member 26 is formed of a resin, it is preferable that the tubular member 26 be formed of a resin having excellent slidability. For example, the tubular member 26 is preferably formed of polytetrafluoroethylene or polyacetal. Further, when the inner circumferential surface of the tubular member 26 is coated with a resin, it is preferable that a resin having excellent slidability such as polytetrafluoroethylene be coated on the inner circumferential surface of the tubular member 26. In this case, even when the wiring 60 slides on the inner circumferential surface of the tubular member 26, the coating of the wiring 60 is not easily broken. In the case in which the tubular member 26 is formed of a resin, the tubular member 26 and the holding member 32 may be integrally molded.

In the above-described embodiment, as the inner circumferential surface of the tubular member 26 and the outer circumferential surface of the small diameter portion 27d of the output side member 27 come into contact with each other, the lower end side of the tubular member 26 is held by the output side member 27. Besides this, for example, as an insertion portion into which the lower end side portion of the tubular member 26 is inserted is formed on the upper end side of the cylindrical portion 27b of the output side member 27 and an inner circumferential surface of the insertion portion and the outer circumferential surface of the lower end side portion of the tubular member 26 come into contact with each other, the lower end side of the tubular member 26 may be held by the output side member 27. Even in this case, it is possible to hold the lower end side of the tubular member 26 to the output side member 27 with a relatively simple configuration.

In the above-described embodiment, although the lower end side of the tubular member 26 is loosely fitted to the output side member 27, the lower end side of the tubular member 26 may be loosely fitted to the rigid internal gear 16 which is the output shaft of the reduction gear 8. Further, in the above-described embodiment, the small diameter portion 27d of the output side member 27 is disposed on the inner circumferential side of the lower end side portion of the input shaft 20, but the small diameter portion 27d may be disposed below the input shaft 20.

In the above-described embodiment, the rigid internal gear 16 serves as the output shaft of the reduction gear 8, but the flexible external gear 17 may serve as the output shaft of the reduction gear 8. In this case, the rigid internal gear 16 is fixed to the case body 11, and the flexible external gear 17 is fixed to the inner ring 19a of the cross roller bearing 19. Further, in the above-described embodiment, the reduction gear 8 is a hollow wave gear device, but the reduction gear 8 may be a hollow reduction gear other than the hollow wave gear device. Furthermore, in the above-described embodiment, the motor 7 is a so-called inner rotor type motor, but the motor 7 may be an outer rotor type motor.

In the above-described embodiment, although the robot 1 includes six joint parts 2, the number of the joint parts 2 provided in the robot 1 may be five or less or may be seven or more. Further, in the above-described embodiment, although the robot 1 includes two arms 3, the number of the arms 3 provided in the robot 1 may be one or may be three or more. Furthermore, in the above-described embodiment, an air piping may be disposed to pass through the inner circumferential side of the joint part 2 (that is, the inner circumferential side of the tubular member 26 (the inner circumferential side of the rotary shaft 13 and the input shaft 20)).

In the above-described embodiment, although the joint part 2 of the robot 1 is configured by the rotary actuator having the motor 7, the reduction gear 8 and so on, the rotary actuator may be used other than for the joint part 2 of the robot 1. For example, the rotary actuator may be used in a driving part of a 0 stage (rotary stage) or the like. Further, in the above-described embodiment, the robot 1 is an industrial robot, but the robot 1 can be applied to various uses. For example, the robot 1 may be a service robot.

### [Reference Signs List]

1 Robot (industrial robot)
2 Joint part (rotary actuator)
7 Motor (hollow motor)
8 Reduction gear (hollow reduction gear)
13 Rotary shaft
16 Rigid internal gear (output shaft of hollow reduction gear, a part of output side portion of hollow reduction gear)
20 Input shaft
26 Tubular member
27 Output side member (fixed member, a part of output side portion of hollow reduction gear)
27d Small diameter portion (inserted portion)
32 Holding member
32a Holding portion
32b Through-hole
60 Wiring

## Claims

1. A rotary actuator comprising:
a hollow motor having a hollow rotary shaft;
a hollow reduction gear having a hollow input shaft disposed coaxially with the rotary shaft and connected to the rotary shaft;
a cylindrical tubular member disposed on an inner circumferential side of the rotary shaft and the input shaft; and
a holding member which holds one end side of the tubular member,
wherein the holding member includes a holding portion in which a through-hole communicating with an inner circumferential side of the tubular member is formed,
one end side of the tubular member is held by the holding portion, and
the other end side of the tubular member is loosely fitted to an output side portion of the hollow reduction gear.

2. The rotary actuator according to claim 1, further comprising a fixed member fixed to an output shaft of the hollow reduction gear,
wherein the fixed member has an inserted portion which is inserted into an inner circumferential side of the other end side portion of the tubular member, and
an inner circumferential surface of the tubular member and an outer circumferential surface of the inserted portion are in contact with each other.

3. The rotary actuator according to claim 2, wherein the inserted portion is disposed on an inner circumferential side of the input shaft.

4. The rotary actuator according to claim 1, further comprising a fixed member fixed to an output shaft of the hollow reduction gear,
wherein the fixed member includes an insertion portion into which the other end side portion of the tubular member is inserted, and
an outer circumferential surface of the tubular member and an inner circumferential surface of the insertion portion are in contact with each other.

5. The rotary actuator according to any one of claims 1 to 4, wherein the tubular member is formed of a resin, or the inner circumferential surface of the tubular member is coated with a resin.

6. A robot comprising a joint part configured by the rotary actuator according to any one of claims 1 to 5, and wiring disposed to pass through the inner circumferential side of the tubular member.
